# EUROPÄISCHE PATENTANMELDUNG

(11) **EP 1 517 011 A2**
(43) Veröffentlichungstag der Anmeldung: **23.03.2005**
(21) Anmeldenummer: 04102894.5
(22) Anmeldetag: 23.06.2004
(51) Int. Cl.: F01N 3/025, F01N 3/035, F01N 11/00

(54) **Abgasanlage mit Partikelfilter sowie zugehörige Heizeinrichtung und zugehöriges Regenerationsverfahren**

(30) Priorität: 22.09.2003 DE 10344216
(71) Anmelder: J. Eberspächer GmbH & Co. KG, 73730 Esslingen (DE)
(72) Erfinder: Többen, Heike, 73066 Uhingen (DE); Rudelt, Josef, 73773 Aichwald (DE)
(74) Vertreter: Patentanwalts-Partnerschaft, Rotermund + Pfusch + Bernhard

(57) **Zusammenfassung**

Die vorliegende Erfindung betrifft eine Abgasanlage für eine Brennkraftmaschine (3), insbesondere in einem Kraftfahrzeug,
- mit mindestens einem Abgasstrang (2), in dem ein Partikelfilter (4) angeordnet ist,
- mit einer stromauf des Partikelfilters (4) im Abgasstrang (2) angeordneten elektrischen Heizeinrichtung (5),
- mit einer stromauf der Heizeinrichtung (5) im Abgasstrang (2) angeordneten Dosiereinrichtung (9) zum Einbringen von Kraftstoff in den Abgasstrang (2),
- mit wenigstens einem Temperatursensor (11) zur Abgastemperaturmessung im Abgasstrang (2) stromab der Heizeinrichtung (5),
- mit einer Steuerung (14) zur Betätigung der Heizeinrichtung (5) und der Dosiereinrichtung (9) in Abhängigkeit des Beladungszustands des Partikelfilters (4) und der Abgastemperatur.

## Beschreibung

Die vorliegende Erfindung betrifft ein Verfahren zum Regenerieren eines Partikelfilters in einem Abgasstrang einer Brennkraftmaschine, insbesondere in einem Kraftfahrzeug. Die vorliegende Erfindung betrifft außerdem eine Abgasanlage für eine Brennkraftmaschine, in deren Abgasstrang ein Partikelfilter angeordnet ist. Des Weiteren betrifft die vorliegende Erfindung eine Heizeinrichtung für eine derartige Abgasanlage.

Die Abgase von Brennkraftmaschinen, und zwar sowohl von Dieselmotoren als auch von Otto-Motoren, enthalten Partikel, insbesondere Rußpartikel. Zur Entfernung dieser Partikel aus den Abgasen ist es üblich, in einem Abgasstrang der Brennkraftmaschine ein Partikelfilter, insbesondere ein Rußfilter, anzuordnen, das einen für die Abgase durchlässigen Filterkörper enthält, der jedoch für die auszuscheidenden Partikel undurchlässig ist. Beispielsweise handelt es sich beim Filterkörper um ein keramisches Wabenfilter mit wechselseitig verschlossenen Kanälen und porösen Wänden, durch welche die Abgase von den Einlasskanälen in die Auslasskanäle gelangen. Während des Filterbetriebs lagern sich die ausgefilterten Partikel am oder im Filterkörper ab, wodurch sich dieser allmählich zusetzt. Mit zunehmender Beladung steigt auch der Durchströmungswiderstand des Partikelfilters, sodass es von Zeit zu Zeit erforderlich ist, das Partikelfilter zu regenerieren. Die Regeneration des Partikelfilters erfolgt durch eine Verbrennung der darin eingelagerten Partikel. Um einen derartigen Verbrennungsprozess zu starten, ist es erforderlich, die Abgastemperatur (kurzfristig) auf eine Zündtemperatur zu erhöhen, bei der die erwünschte Verbrennungsreaktion selbsttätig in Gang gesetzt wird.

Die zum Start der Verbrennungsreaktion erforderliche Temperaturerhöhung kann beispielsweise mit Hilfe einer entsprechend ansteuerbaren Einspritzanlage der Brennkraftmaschine erreicht werden. Beispielsweise wird eine zusätzliche Nacheinspritzung von Kraftstoff während eines Expansionstaktes des jeweiligen Zylinders durchgeführt. Bei einer solchen innermotorischen Nacheinspritzung können Nachteile wie Schmierstoffmangel an den Zylinderwänden sowie eine Motorölverdünnung entstehen. Alternativ ist es ebenso möglich, mittels einer geeigneten Dosiereinrichtung Kraftstoff stromab der Brennkraftmaschine in den Abgasstrang einzubringen. In jedem Fall enthält der Abgasstrang stromauf des Partikelfilters einen Oxidationskatalysator, an dem der innermotorisch oder außermotorisch eingebrachte Kraftstoff exotherm umgewandelt werden kann, was zu der gewünschten Temperaturerhöhung führt.

Die Kraftstoffumsetzung am Oxidationskatalysator findet jedoch ihrerseits nur ab einer Abgasmindesttemperatur hinreichend sicher statt. Bei modernen Brennkraftmaschinen, insbesondere bei Dieselmotor mit großem Hubraum, kann es jedoch in unteren Lastbereichen durchaus vorkommen, dass die Abgastemperatur die für die Umsetzung des Kraftstoffs am Oxidationskatalysator erforderliche Abgasmindesttemperatur nicht erreicht. Für die Regeneration des Partikelfilters muss bei herkömmlichen Systemen dementsprechend ein Betriebszustand der Brennkraftmaschine abgewartet werden, der zu entsprechend höheren Abgastemperaturen führt. Da eine derartige Regeneration in der Regel erst bei einem höheren Beladungsgrad des Partikelfilters, also bei einem relativ großen Durchströmungswiderstand des Partikelfilters durchgeführt werden soll, besitzt die Brennkraftmaschine bei verzögerter Regeneration eine reduzierte Leistung sowie einen verschlechterten Wirkungsgrad.

Hier setzt die Erfindung an. Die vorliegende Erfindung beschäftigt sich mit dem Problem, einen Weg aufzuzeigen, der es ermöglicht, die Regeneration des Partikelfilters auch in unteren Lastbereichen der Brennkraftmaschine durchzuführen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Abgastemperatur im Bedarfsfall vor dem Einbringen des Kraftstoffs mittels geeigneter Maßnahmen über die geforderte Abgasmindesttemperatur anzuheben. Erreicht wird dies beispielsweise mittels einer elektrischen Heizeinrichtung, die stromauf des Partikelfilters im Abgasstrang angeordnet sein kann. Die Erfindung ermöglicht es, die Temperatur der Abgase unabhängig vom Betriebszustand der Brennkraftmaschine auf die gewünschte Abgasmindesttemperatur anzuheben. Folglich ermöglicht die Erfindung eine sichere exotherme Reaktion am Oxidationskatalysator, wenn zum Starten der Verbrennungsreaktion Kraftstoff außermotorisch oder innermotorisch in den Abgasstrang eingeleitet wird. Dementsprechend kann auch bei unteren Lastbereichen der Brennkraftmaschine eine ordnungsgemäße Regeneration des Partikelfilters durchgeführt wird. Dies ist für den Wirkungsgrad und die Leistungsentfaltung der Brennkraftmaschine von Vorteil.

Von besonderem Vorteil ist dabei eine Ausführungsform, bei welcher die Heizeinrichtung einen Metallkörper aufweist, der als elektrischer Heizwiderstand ausgestaltet ist und sich dementsprechend bei einer Bestromung erwärmt. Ein derartiger Metallkörper kann von den Abgasen durchströmt werden, wodurch sich ein intensiver Wärmeaustausch zwischen den Abgasen und den angeströmten Wandungen des Metallkörpers ergibt. Des Weiteren erfolgt die Umwandlung der elektrischen Energie in Wärmeenergie unmittelbar dort, wo die Wärme benötigt wird, nämlich an den von den Abgasen beaufschlagten Wandungen des Metallkörpers. Dementsprechend arbeitet eine derartige Heizeinrichtung mit einem vergleichsweise hohen Wirkungsgrad.

Von besonderer Bedeutung ist eine Ausführungsform, bei welcher die Heizeinrichtung bzw. der Metallkörper bzw. den Metallkörper durchziehende Kanäle mit einer der Abgasströmung ausgesetzten Oxidationskatalysator-Beschichtung versehen ist bzw. sind. An dieser Oxidationskatalysator-Beschichtung kann dann die gewünschte exotherme Kraftstoffumsetzung erfolgen. Bei dieser Bauweise erfolgt die Umsetzung des Kraftstoffs somit direkt am Ort der Wärmeentstehung. Auf diese Weise können auch hier Verluste vermieden werden, sodass ein besonders hoher Wirkungsgrad erzielbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

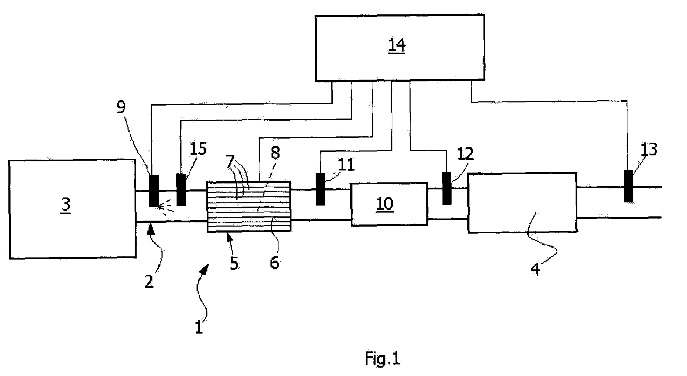

Die einzige Fig. 1 zeigt eine schaltplanartige Prinzipdarstellung einer Abgasanlage nach der Erfindung.

Entsprechend Fig. 1 umfasst eine erfindungsgemäße Abgasanlage 1 zumindest einen Abgasstrang 2, der Abgase, die eine Brennkraftmaschine 3 erzeugt, von der Brennkraftmaschine 3 abführt. Vorteilhaft sind die Brennkraftmaschine 3 und somit die Abgasanlage 1 in einem Kraftfahrzeug angeordnet. Im Abgasstrang 2 ist ein Partikelfilter 4 angeordnet, das in den Abgasen der Brennkraftmaschine 3 mitgeführte Partikel herausfiltert. Bei diesen Partikeln handelt es sich vorwiegend um Rußpartikel, sodass das Partikelfilter 4 auch als Rußfilter bezeichnet werden kann. Üblicherweise sind Brennkraftmaschinen 3, die als Dieselmotoren ausgestaltet sind, mit einem derartigen Partikelfilter 4 ausgestattet. Ebenso können auch Brennkraftmaschinen 3, die als Otto-Motoren ausgestaltet sind, mit einem derartigen Partikelfilter 4 versehen sein, insbesondere dann, wenn der jeweilige Otto-Motor mit einem direkteinspritzenden Brennverfahren arbeitet.

Übliche Partikelfilter 4 arbeiten mit einem hier nicht gezeigten Filterkörper, der für die Abgase durchlässig und für die auszuscheidenden Partikel undurchlässig ist. Bei der Durchströmung mit den Abgasen erfolgt somit eine Anlagerung der Partikel am bzw. im Filterkörper. Hierdurch ergibt sich eine Beladung des Filterkörpers, die den Durchströmungswiderstand desselben allmählich anwachsen lässt. Beispielsweise handelt es sich beim Partikelkörper um einen Keramikkörper mit Einlasskanälen, die eingangsseitig offen und ausgangsseitig verschlossen sind, sowie mit Auslasskanälen, die eingangsseitig verschlossen und ausgangsseitig offen sind, wobei die Einlasskanäle und die Auslasskanäle einander abwechselnd angeordnet sind und durch poröse Wandungen voneinander getrennt sind. Bei der Durchströmung dieses Filterkörpers treten die Abgase in die Einlasskanäle ein und müssen die porösen Wände durchdringen, um in die Auslasskanäle zu gelangen, aus denen sie aus dem Filterkörper wieder austreten können. Da die porösen Wandungen für die Partikel undurchlässig sind, lagern sich diese an bzw. in den Wandungen ab.

Stromauf des Partikelfilters 4 ist im Abgasstrang 2 eine elektrische Heizeinrichtung 5 angeordnet, die so ausgestaltet ist, dass damit die Abgastemperatur der sie durchströmenden Abgase erhöht werden kann. Die Heizeinrichtung 5 weist vorzugsweise einen Metallkörper 6 auf, der elektrisch beheizbar ausgestaltet ist. Dieser Metallkörper 6 ist dabei so im Abgasstrang 2 angeordnet, dass er von den Abgasen angeströmt oder durchströmt wird. Zweckmäßig enthält der Metallkörper 6 eine Vielzahl paralleler, hier durch horizontale Linien angedeuteter Kanäle 7, die in ihrer Längsrichtung von den Abgasen durchströmbar sind.

Die elektrische Beheizung des Metallkörpers 6 kann beispielsweise mittels hier nicht dargestellter Heizdrähte realisiert werden. Derartige Heizdrähte sind elektrische Heizwiderstände, die sich bei einer Bestromung erwärmen. Bei der hier gezeigten, bevorzugten Ausführungsform ist der Metallkörper 6 selbst bzw. sind durchströmte Abschnitte des Metallkörpers 6 selbst als elektrischer Heizwiderstand ausgestaltet. Dementsprechend ist der Metallkörper 6 auf eine hier nicht gezeigte, geeignete Weise an eine Stromversorgung angeschlossen. Bei einer Bestromung des Metallkörpers 6 kann sich dieser in gewünschter Weise erwärmen. Sofern der Metallkörper 6 mit den Kanälen 7 ausgestattet ist, kann die Gestaltung des Metallkörpers 6 zweckmäßig so ausgeführt sein, dass die Wandungen der Kanäle 7 Bestandteile des elektrischen Heizwiderstands sind oder diesen bilden. Die Kanäle 7 bzw. deren Wandungen können damit bei der Bestromung des Metallkörpers 6 unmittelbar erwärmt werden. Die Wärmeerzeugung lässt sich somit gezielt dort durchführen, wo der Metallkörper 6 mit den Abgasen beaufschlagt ist, nämlich in den Kanälen 7.

Bei der hier gezeigten, bevorzugten Ausführungsform ist in die Heizeinrichtung 5 ein Oxidationskatalysator 8 integriert. Erreicht wird dies hier durch das Anbringen einer Oxidationskatalysator-Beschichtung 8 an bzw. in der Heizeinrichtung 5. Es ist klar, dass diese Oxidationskatalysator-Beschichtung 8 an den von der Abgasströmung beaufschlagten Stellen der Heizeinrichtung 5 angebracht ist. Dementsprechend befindet sich die Oxidationskatalysator-Beschichtung 8 am Metallkörper 6 und dort vorzugsweise in den Kanälen 7 bzw. an deren Wandung. Ein derartiger Oxidationskatalysator 8 bzw. eine derartige Oxidationskatalysator-Beschichtung 8 führt bei einer entsprechenden Abgastemperatur zu einer exothermen Umsetzung von Kraftstoff, der gegebenenfalls in den Abgasen enthalten ist. Dabei ist es von besonderem Vorteil für diese Reaktion, dass die Oxidationskatalysator-Beschichtung 8 am Ort der Wärmeentstehung, nämlich an den Wänden der Kanäle 7 bzw. am Metallkörper 6 angebracht ist.

Die erfindungsgemäße Abgasanlage 1 kann außerdem eine Dosiereinrichtung 9 umfassen, die stromauf der Heizeinrichtung 5 im Abgasstrang 2 angeordnet ist und zum Einbringen von Kraftstoff in den Abgasstrang 2 dient. Die Dosiereinrichtung 9 ist beispielsweise zur Durchführung einer Eindüsung oder einer Verdampfung des Kraftstoffs ausgebildet.

Anstelle der hier vorgeschlagenen außermotorischen Kraftstoffzugabe kann auch eine innermotorische Kraftstoffzugabe realisiert werden, z.B. durch eine sehr späte Kraftstoff-Nacheinspritzung in den oder die Zylinder der Brennkraftmaschine 3. Die Dosiereinrichtung 9 ist dann durch eine Kraftstoff-Einspritzeinrichtung der Brennkraftmaschine 3 gebildet.

Zusätzlich oder alternativ zu der in die Heizeinrichtung 5 integrierten Oxidationskatalysator-Beschichtung 8 kann die Abgasanlage 1 auch mit einem separaten Oxidationskatalysator 10 ausgestattet sein, der strömungstechnisch zwischen dem Partikelfilter 4 und der Heizeinrichtung 5 angeordnet ist. Dieser separate Oxidationskatalysator 10 dient demselben Zweck wie die stromauf davon in der Heizeinrichtung 5 angeordnete Oxidationskatalysator-Beschichtung 8, nämlich zur exothermen Umwandlung von im Abgas mitgeführtem Kraftstoff. Sofern sowohl die Oxidationskatalysator-Beschichtung 8 als auch der separate Oxidationskatalysator 10 vorgesehen sind, dient der nachgeschaltete Oxidationskatalysator 10 zur Umwandlung eines Restkraftstoffgehalts, der die Heizeinrichtung 5 ohne Umsetzung durchströmen konnte.

Bei der hier gezeigten Ausführungsform sind außerdem ein Temperatursensor 11 sowie zwei Drucksensoren 12 und 13 vorgesehen. Mit Hilfe des Temperatursensors 11 kann die Abgastemperatur stromab der Heizeinrichtung 5 im Abgasstrang 2 ermittelt werden. Außerdem kann optional ein weiterer Temperatursensor 15 vorgesehen sein, der stromauf der Heizeinrichtung 5 und stromab der Dosiereinrichtung 9 angeordnet ist. Mit beiden Temperatursensoren 11 und 15 kann eine Temperaturdifferenz ΔT vor und nach der Heizeinrichtung 5 ermittelt werden, was beispielsweise zur Bestimmung deren Heizleistung sowie zu deren Diagnose genutzt werden kann. Die Drucksensoren 12 und 13 sind stromauf und stromab des Partikelfilters 4 angeordnet, wodurch es möglich ist, den Druckabfall am Partikelfilter 4 zu messen. Dieser Druckabfall kann dabei zur Bestimmung des Beladungszustands des Partikelfilters 4 herausgezogen werden.

Die erfindungsgemäße Abgasanlage 1 umfasst außerdem eine Steuerung 14, die eingangsseitig mit dem Temperatursensor 11 und mit den Drucksensoren 12 und 13 verbunden ist. Ausgangsseitig ist die Steuerung 14 an die Dosiereinrichtung 9 und an die Heizeinrichtung 5 angeschlossen. Die Steuerung 14 dient zur Betätigung der Heizeinrichtung 5 und der Dosiereinrichtung 9. Mit Hilfe der Drucksensoren 12, 13 kann die Steuerung 14 den Beladungszustand des Partikelfilters 4 überwachen und bei Erreichen eines entsprechenden, vorbestimmten Beladungsgrads eine Regeneration des Partikelfilters 4 einleiten. Des Weiteren kann die Steuerung 14 mit Hilfe des Temperatursensors 11 die Abgastemperatur überwachen.

Die erfindungsgemäße Abgasanlage 1 arbeitet entsprechend dem folgenden, erfindungsgemäßen Verfahren:
Durch Überwachen und Auswerten von Betriebszuständen der Brennkraftmaschine 3 sowie verschiedener Parameter, wie z.B. die Signale der Drucksensoren 12, 13, ermittelt die Steuerung 14 den Beladungszustand des Partikelfilters 4. Sobald ein vorbestimmter Grenzwert für die Beladung des Partikelfilters 4 erreicht ist, startet die Steuerung 14 eine Prozedur zum Regenerieren des Partikelfilters 4. Hierzu wird zunächst über den Temperatursensor 11 die aktuelle Abgastemperatur abgefragt. Liegt die gemessenen Abgastemperatur unter einer vorbestimmten Abgasmindesttemperatur, betätigt die Steuerung 14 die Heizeinrichtung 5 zum Beheizen der Abgase. D.h., die Heizeinrichtung 5 bzw. deren Metallkörper 6 wird bestromt, wodurch sich die der Abgasströmung ausgesetzten Wandabschnitte des Metallkörpers 6, insbesondere in den Kanälen 7, entsprechend aufheizen.

Sobald die Steuerung 14 das Erreichen oder Überschreiten der gewünschten Abgasmindesttemperatur feststellt, betätigt die Steuerung 14 die Dosiereinrichtung 9. Mit Hilfe der Dosiereinrichtung 9 wird dann eine vorbestimmte Kraftstoffmenge in den Abgasstrang 2 stromab der Heizeinrichtung 5 eingebracht, insbesondere eingedüst bzw. eingedampft. Da sich die Oxidationskatalysator-Beschichtung 8 auf den mit der Abgasströmung beaufschlagten Oberflächen der Heizeinrichtung 5 bzw. des Metallkörpers 6 befindet, besitzt auch die Oxidationskatalysator-Beschichtung 8 die gewünschte Temperatur. Auf diese Weise kann der damit in Kontakt kommende Kraftstoff erfolgreich umgesetzt werden, d.h., an der Oxidationskatalysator-Beschichtung 8 findet eine exotherme Umwandlungsreaktion statt, bei welcher der im Abgas mitgeführte Kraftstoff unter Abgabe von Wärme oxidiert wird. Kraftstoff, der ohne Oxidation die Oxidationskatalysator-Beschichtung 8, also die Heizeinrichtung 5 passiert, wird spätestens im nachgeschalteten separaten Oxidationskatalysator 10 exotherm umgewandelt.

In der Folge kommt es somit zu einer starken Temperaturanhebung in den Abgasen und somit auch im Partikelfilter 4. Die Kraftstoffeinbringung mittels der Dosiereinrichtung 9 ist so gewählt, dass die sich ergebende Temperaturerhöhung im Partikelfilter 4 zur Selbstentzündungstemperatur der darin eingelagerten Partikel führt. D.h., durch die Anhebung der Temperatur mittels der Kraftstoffeinspritzung wird die Verbrennungsreaktion der Partikel im Partikelfilter 4 initiiert. Diese Verbrennungsreaktion kann - wenn sie in Gang gesetzt ist - selbsttätig ablaufen, da sie selbst stark exotherm ist.

Das Regenerationsverfahren wird dabei während eines üblichen Magerbetriebs der Brennkraftmaschine 3 durchgeführt, also wenn Sauerstoffüberschuss im Abgas herrscht.

Sofern die Temperaturmessung zu Beginn der Regenerationsprozedur ergibt, dass die Abgastemperatur ohnehin oberhalb der Abgasmindesttemperatur liegt, sodass eine zusätzliche Beheizung der Abgase mit Hilfe der elektrischen Heizeinrichtung 5 nicht erforderlich ist, betätigt die Steuerung 14 gleich die Dosiereinrichtung 9 zum Einbringen der erforderlichen Kraftstoffmenge in den Abgasstrang 2.

Mit Hilfe der erfindungsgemäßen Abgasanlage 1 kann in Verbindung mit dem erfindungsgemäßen Regenerationsverfahren für jeden beliebigen, Abgas produzierenden Betriebszustand der Brennkraftmaschine eine ordnungsgemäße Regeneration des Partikelfilters 4 durchgeführt werden. Die Regeneration des Partikelfilters 4 ist dank der Erfindung somit völlig unabhängig von der Temperatur der Abgase stromauf der Heizeinrichtung 5. Mit Hilfe der Erfindung kann das Partikelfilter 4 somit immer dann regeneriert werden, wenn dies aufgrund seines Beladungszustands angebracht ist. Schlechte Wirkungsgrade und Leistungswerte der Brennkraftmaschine 3 aufgrund einer überfälligen Regeneration des Partikelfilters 4 können somit vermieden werden.

Besonders vorteilhaft ist die erfindungsgemäße Heizeinrichtung 5, da dort die Oxidationskatalysator-Beschichtung 8 am Ort der Wärmeerzeugung, insbesondere an den Wänden der Kanäle 7 bzw. an den von der Abgasströmung beaufschlagten Wandungen des Metallkörpers 6, angebracht ist. Die Bestromung des Metallkörpers 6 führt somit unmittelbar zu einer Aufheizung der Oxidationskatalysator-Beschichtung 8 und kann außerdem die Wärme direkt an die Abgasströmung abgeben. Insgesamt lassen sich dadurch vergleichsweise hohe Wirkungsgrade erzielen.

## Patentansprüche

1. Verfahren zum Regenerieren eines Partikelfilters (4) in einem Abgasstrang (2) einer Brennkraftmaschine (3), insbesondere in einem Kraftfahrzeug,
- bei dem während eines Magerbetriebs der Brennkraftmaschine (3) stromauf des Partikelfilters (4) Kraftstoff in den Abgasstrang (2) eingebracht wird,
- bei dem vor dem Einbringen des Kraftstoffs eine Abgastemperatur überprüft und für den Fall, dass die Abgastemperatur unter einer vorbestimmten Abgasmindesttemperatur liegt, so lange erhöht wird, bis sie die Abgasmindesttemperatur aufweist oder übersteigt.

2. Verfahren nach Anspruch 1,
**dadurch gekennzeichnet,**
**dass** die Abgastemperatur mittels einer elektrischen Heizeinrichtung (5) erhöht wird, die stromauf des Partikelfilters (4) im Abgasstrang (2) angeordnet ist.

3. Verfahren nach Anspruch 2,
**dadurch gekennzeichnet,**
**dass** die Heizeinrichtung (5) zumindest einen Metallkörper (6) aufweist, der elektrisch beheizbar ausgestaltet ist.

4. Verfahren nach Anspruch 3,
**dadurch gekennzeichnet,**
**dass** der Metallkörper (6) mehrere vom Abgas parallel durchströmbare Kanäle (7) enthält.

5. Verfahren nach einem der Ansprüche 2 bis 4,
**dadurch gekennzeichnet,**
**dass** der Metallkörper (6) oder zumindest ein von der Abgasströmung beaufschlagter Bereich (7) des Metallkörpers (6) als elektrischer Heizwiderstand ausgestaltet ist, der sich bei einer Bestromung erwärmt.

6. Verfahren nach einem der Ansprüche 2 bis 5,
**dadurch gekennzeichnet,**
**dass** die Heizeinrichtung (5) und/oder der Metallkörper (6) und/oder die Kanäle (7) mit einer der Abgasströmung ausgesetzten Oxidationskatalysator-Beschichtung (8) ist/sind.

7. Verfahren nach einem der Ansprüche 1 bis 6,
**dadurch gekennzeichnet,**
**dass** zwischen einer Einleitstelle zum Einbringen des Kraftstoffs und dem Partikelfilter (4) ein Oxidationskatalysator (10) im Abgasstrang (2) angeordnet ist.

8. Verfahren nach den Ansprüchen 2 und 7,
**dadurch gekennzeichnet,**
**dass** der Oxidationskatalysator (10) zwischen der Heizeinrichtung (5) und dem Partikelfilter (4) angeordnet ist.

9. Heizeinrichtung für eine Abgasanlage (1) einer Brennkraftmaschine (3), insbesondere in einem Kraftfahrzeug, **gekennzeichnet durch** einen elektrisch beheizbaren Metallkörper (6).

10. Heizeinrichtung nach Anspruch 9, **gekennzeichnet durch** die kennzeichnenden Merkmale wenigstens eines der Ansprüche 4 bis 6.

11. Abgasanlage für eine Brennkraftmaschine (3), insbesondere in einem Kraftfahrzeug,
- mit mindestens einem Abgasstrang (2), in dem ein Partikelfilter (4) angeordnet ist,
- mit einer stromauf des Partikelfilters (4) im Abgasstrang (2) angeordneten elektrischen Heizeinrichtung (5),
- mit einer stromauf der Heizeinrichtung (5) im Abgasstrang (2) angeordneten Dosiereinrichtung (9) zum Einbringen von Kraftstoff in den Abgasstrang (2),
- mit einem Temperatursensor (11) zur Abgastemperaturmessung im Abgasstrang (2) stromab der Heizeinrichtung (5),
- mit einer Steuerung (14) zur Betätigung der Heizeinrichtung (5) und der Dosiereinrichtung (9) in Abhängigkeit des Beladungszustands des Partikelfilters (4) und der Abgastemperatur.

12. Abgasanlage nach Anspruch 11,
**dadurch gekennzeichnet,**
**dass** die Steuerung (14) zum Regenerieren des Partikelfilters (4) vor einer Betätigung der Dosiereinrichtung (9) die Abgastemperatur überprüft und für den Fall, dass die Abgastemperatur unter einer vorbestimmten Abgasmindesttemperatur liegt, die Heizeinrichtung (5) so lange betätigt, bis die Abgastemperatur die Abgasmindesttemperatur aufweist oder übersteigt, und für den Fall, dass die Abgastemperatur die vorbestimmte Abgasmindesttemperatur aufweist oder übersteigt, die Dosiereinrichtung (9) zum Einbringen von Kraftstoff in den Abgasstrang (2) betätigt.

13. Abgasanlage nach Anspruch 11 oder 12, **gekennzeichnet durch** die kennzeichnenden Merkmale wenigstens eines der Ansprüche 3 bis 8.
